# EUROPEAN PATENT APPLICATION

(11) **EP 4 518 255 A1**
(43) Date of publication of application: **05.03.2025**
(21) Application number: 23193752.5
(22) Date of filing: 28.08.2023
(51) Int. Cl.: H04L 12/10

(54) **A SYSTEM FOR PROVIDING POWER OVER ETHERNET**

(71) Applicant: Siemens Aktiengesellschaft, 80333 München (DE)
(72) Inventor: Gonul, Mustafa, 34406 Kagithane (TR); Meisinger, Andreas, 92287 Schmidmühlen (DE); Schwering, Wolfgang, 91341 Röttenbach (DE); Seker, Isa Ceyhun, 34732 Kadikoy (TR)
(74) Representative: Siemens Patent Attorneys

(57) **Abstract**

It is a system for delivering power over ethernet to a device is provided. The system may comprise, at least one unmanaged switch having at least two first ports, which are adapted to provide data connection and provide power, and at least one application specific integrated circuit which is adapted to provide data connection and power connection of said first ports; at least one managed switch having at least two second ports, wherein at least one second port is connected to at least one first port, and at least one main processor, wherein the main processor is adapted to send ethernet frames containing control data for the application specific integrated circuit to the application specific integrated circuit.

## Description

### Technical Field

Present invention relates to a system for providing power over ethernet.

### Background Art

Network switches are devices that facilitate connectivity between various devices. These switches consist of multiple ports, typically Ethernet ports. By establishing a connection between one of the switch's ports and a port on a device, a connection is established between that device and the network switch. When multiple devices are connected to the network switch, it facilitates connections between these devices.

In conventional applications, switches were primarily employed for facilitating data transfer among devices. However, switches possess capabilities beyond mere data transfer. Consequently, apart from their traditional data transfer function, switches have begun to be utilized for powering connected devices. As disclosed in the patent document no. US2005080516A1, power is supplied to the devices from switches through the ethernet port. Such application is commonly referred to as Power over Ethernet (PoE). With the implementation of Power over Ethernet, devices connected to the switch no longer need an additional power source. For instance, a security camera can be powered through the switch itself. As a result, there is no requirement to provide a separate power line for each device connected to the switch.

With the developing technology, amount of power supplied from the switches to the connected devices is increased. Nowadays, it is possible to supply 60 watts energy to the devices with PoE++ compatible devices and even possible to supply 90 watts energy to the devices with PoH (Power Over HDBaseT) compatible devices. Therefore, it is possible to energise more power-hungry devices with switches. Nevertheless, the drawback of supplying additional power through switches is the generation of heat. To facilitate power supply, switches incorporate a processor responsible for managing the distribution of power (determining the specific port and amount of power to be allocated) and a power supply element, such as a power driver chip. Both components generate heat while in operation.

As the power supplied by the switch increases, the heat produced by these components also increases.

To address this heating issue, active and passive cooling systems are employed. Active cooling systems utilize fans or liquid cooling systems to dissipate the heat generated by the processor and/or power supply element. While these systems are suitable for personal applications, they may not be suitable for industrial applications due to the vibrations caused by the active cooling components. On the other hand, passive cooling systems (such as heatsinks) are insufficient to dissipate the generated heat. Therefore, especially in the industrial applications, there is a need for overcoming said problems.

### Brief Description of the Invention

It is an object of the exemplary embodiment of the present invention to provide an efficient system for providing power over ethernet.

It is a further object of the exemplary embodiment of the present invention to provide an efficient system that can provide high amount of power over ethernet.

It is a further object of the exemplary embodiment of the present invention to provide an efficient system for overcoming heating problem that occurs in high power applications.

According to the present invention, a system for delivering power over ethernet to a device is provided. The system may comprise, at least one unmanaged switch having at least two first ports, which are adapted to provide data connection and provide power, and at least one application specific integrated circuit which is adapted to provide data connection and power connection of said first ports; at least one managed switch having at least two second ports, wherein at least one second port is connected to at least one first port, and at least one main processor, wherein the main processor is adapted to send ethernet frames containing control data for the application specific integrated circuit to the application specific integrated circuit.

According to the system of the present invention, by separating the power supplying and controlling functions to separate switches, overheating of a single switch is prevented. Thus, even when supplying high power to devices via Ethernet, it is feasible to maintain the temperature of both unmanaged and managed switches within safe levels by utilizing passive cooling elements. Accordingly, system of the present application can be used in environments, such as an industrial environment, where active cooling elements may not be suitable.

### Description of Drawings

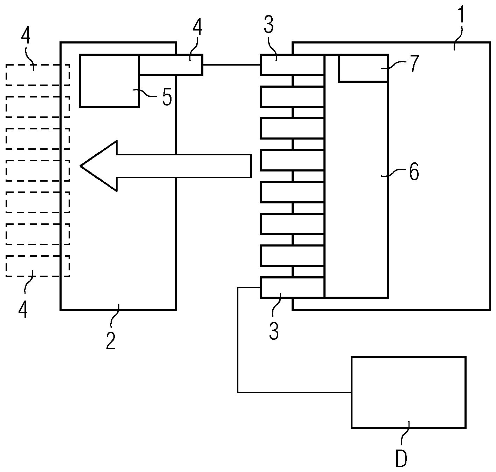

Figure 1 illustrates an exemplary block diagram of the system of the present invention.

The reference numbers used in figures possess the following meanings:

| | |
|---|---|
| Device | (D) |
| Unmanaged switch | (1) |
| Managed switch | (2) |
| First port | (3) |
| Second port | (4) |
| Main processor | (5) |
| Application specific integrated circuit | (6) |
| Remote management unit | (7) |

### Detailed Description of the Invention

Referring to FIG. 1, the system of the present invention is suitable to provide power over ethernet to a device (D). The system may comprise an unmanaged switch (1) having at least two, and preferably more, first ports (3), i.e. ethernet ports. The first ports (3) are adapted to provide data connection and provide power. There is provided an application specific integrated circuit (6) which is adapted to provide data connection and power connection of the first ports (3). The system may comprise a managed switch (2) with at least two, and preferably more, second ports (4), i.e. ethernet ports.

The second port (4) is connected to the first port (3), through an ethernet cable, for instance, and a main processor (5), which is adapted to send ethernet frames containing control data for the application specific integrated circuit (6) to the application specific integrated circuit (6).

In an exemplary embodiment of the present application, the managed switch (2) may be connected to a first port (3) of the unmanaged switch (1) and a separate device (D) may be connected to another first port (3) of the unmanaged switch (1). The first port (3) of the unmanaged switch (1) can provide data connection and supply power to the device (D). Although unmanaged switch (1) can supply power to the device (D), by virtue of the unmanaged structure, the unmanaged switch (1) cannot control the supplied power itself. Thus, in order to control supplied power, the unmanaged switch (1) can rely on the ethernet frames sent by the main processor (5) of the managed switch (2). In such a configuration, the managed switch (2) can act as a master device and the unmanaged switch (1) can act as a slave device.

Hence, for the managed switch (2), the first ports (3) of the unmanaged switch (1) can be the same as the second ports (4) with the help of hardware offloading for Bridge and PoE functionality. Since the two main heat sources, namely the main processor (5) and the application specific integrated circuit (6), can be situated across different devices, the overheating problem can be mitigated. The unmanaged switches (1) lack powerful control chips that consume high power and generate heat. Thus, the only heat-generating component in an unmanaged switch is the application-specific integrated circuit. Moreover, the managed switch (2) of the present invention does not supply power through the second ports (4). Thus, the only major heat generating component of the managed switch (2) is the main processor (5).

Furthermore, according to the present invention, by employing the two components in separate switches, even if one of the components, say the application specific integrated circuit (6) of the unmanaged switch (1), is damaged due to overheating, the other component, say the main processor (5) of the managed switch (2), would not be damaged. Therefore, in the event of a failure, replacing only one component, i.e. the unmanaged switch (1), would be sufficient. Since the managed switch (2) has plurality of second ports (4), it would be possible to connect the managed switch (2) to multiple unmanaged switches (1) at the same time. Thus, according to the present invention, it would be possible to provide power to a plurality of devices (D) using only one managed switch (2) and multiple unmanaged switches (1).

In some embodiments of the present invention, the unmanaged switch (1) may comprise at least one remote management unit (7), which is in connection with the application specific integrated circuit (6). In such an embodiment, the ethernet frames sent by the processor (5can be received by the remote management unit (7) and the related control data for the registers of the application specific integrated circuit (6) can be obtained. The control data can be sent to said registers by the remote management unit (7).

In some embodiments of the present invention, the managed switch (2) may comprise at least one passive cooling element, such as a heatsink, connected to the main processor (5). Although main processor (5) is only major heat generating component of the managed switch (2), it can still generate high amount of heat to damage the managed switch (2). Despite the main processor (5) being the primary source of heat generation in a managed switch (2), it can still have the potential to produce a substantial amount of heat that can potentially harm the switch. In such an embodiment, by using a passive cooling element, the heat generated by the main processor (5) can be dissipated easily. Similarly, the unmanaged switch (1) may comprise at least one other passive cooling element, such as a heatsink, connected to the application specific integrated circuit (6). Therefore, heat generated by the application specific integrated circuit (6) can be dissipated through the other passive cooling element. The system of the present invention, which utilizes only passive cooling elements in both the unmanaged switch (1) and managed switch (2), is well-suited for industrial environments in such an embodiment.

In some embodiments of the present invention, the managed switch (2) may comprise at least one active cooling element, such as a fan or liquid cooling system, connected to the main processor (5) and the unmanaged switch (1) may comprise at least one other passive cooling element, such as a heatsink, connected to the application specific integrated circuit (6). Since the managed switch (2), comprising an active cooling element, is not directly connected to a device (D) of the industrial environment, it may well be suitable for use in an industrial environment.

In some embodiments of the present invention, the application specific integrated circuit (6) may comprise at least two integrated management processors, preferably one for each first port (3). The integrated management processors control the power and data supplied by the first ports (3). The integrated management processors would be relatively weak processor and the heat generated by them would be negligible.

In some embodiments of the present invention, the system may comprise at least one controller connected to at least one second port (4) of the managed switch (2). The controller may comprise at least one user interface for generating control data to be used in the ethernet frames. In an exemplary embodiment, the controller may be a computer. In such an embodiment, the users may be able to create control data for controlling the extent of the power is to be supplied from each of the first ports (3).

## Claims

1. A system for delivering power over ethernet to a device (D), **characterized by** comprising
- at least one unmanaged switch (1) having at least two first ports (3), which are adapted to provide data connection and provide power, and at least one application specific integrated circuit (6) which is adapted to provide data connection and power connection of said first ports (3);
- at least one managed switch (2) having at least two second ports (4), wherein at least one second port (4) is connected to the at least one first port (3), and at least one main processor (5), wherein said main processor (5) is adapted to send ethernet frames containing control data for said application specific integrated circuit (6) to the application specific integrated circuit (6).

2. A system according to claim 1, **characterized in that** the unmanaged switch (1) comprises at least one remote management unit (7), which is in connection with said application specific integrated circuit (6).

3. A system according to claims 1 or 2, **characterized in that** the managed switch (2) comprises at least one passive cooling element connected to the main processor (5).

4. A system according to any one of the preceding claims, **characterized in that** the unmanaged switch (1) comprises at least one other passive cooling element connected to application specific integrated circuit (6).

5. A system according to claims 1 or 2, **characterized in that** the managed switch (2) comprises at least one active cooling element connected to the main processor (5) and the unmanaged switch (1) comprises at least one other passive cooling element connected to application specific integrated circuit (6).

6. A system according to any one of the preceding claims, **characterized in that** the application specific integrated circuit (6) comprises at least two integrated management processors.

7. A system according to any one of the preceding claims, **characterized by** comprising at least one controller connected to at least one second port (4) of the managed switch (2).

8. A system according to claim 7, **characterized in that** said controller comprises at least one user interface.
